# EUROPÄISCHE PATENTANMELDUNG

(11) **EP 4 162 803 A1**
(43) Veröffentlichungstag der Anmeldung: **12.04.2023**
(21) Anmeldenummer: 22200651.2
(22) Anmeldetag: 10.10.2022
(51) Int. Cl.: A23J 1/00, A23J 1/14, A23J 3/22

(54) **FISCHERSATZPRODUKT UND VERFAHREN ZU DESSEN HERSTELLUNG**

(30) Priorität: 08.10.2021 DE 102021126196
(71) Anmelder: endori food GmbH & Co. KG, 96135 Stegaurach (DE)
(72) Erfinder: SCHWENNINGER, Axel, 96135 Stegaurach (DE); REBHAN, Georg, 96135 Stegaurach (DE)
(74) Vertreter: SJW Patentanwälte

(57) **Zusammenfassung**

Die Erfindung betrifft ein Fischersatzprodukt umfassend eine Mischung aus einem zerkleinertem Nasstexturat mit einem Gewichtsanteil im Bereich von 12 % bis 35 % an der Gesamtmasse der Mischung auf Basis eines Erbsenproteins und/oder Ackerbohnenproteins; und einem Trockentexturat mit einem Gewichtsanteil im Bereich von 5 % bis 20 % an der der Gesamtmasse der Mischung auf Basis wenigstens eines der folgenden Proteine: Weizen, Reis, Mais, Soja, Hafer, Ackerbohne oder Kombinationen hiervon. Zudem umgibt eine Panade die Mischung.

## Beschreibung

Die Erfindung betrifft ein Fischersatzprodukt sowie ein Verfahren zu dessen Herstellung. Die vorliegende Anmeldung nimmt die Priorität der deutschen Anmeldung DE 10 2021 126 196.1 vom 8. Oktober 2021 in Anspruch, deren Offenbarungsgehalt durch Ruckbezog vollständig aufgenommen wird.

### HINTERGRUND

Traditionelle Fischwaren, insbesondere Fischstäbchen, Fischfilets und ähnliches sind zum Braten, Grillen oder Backen bestimmt. Dabei sind diese oftmals mit einer Panade umgeben, die mehr oder weniger fest haftet, aber gleichzeitig ein "Auflösen" oder "Auseinanderfließen" des Fischfleisches verhindert. Die Panade bewirkt auch die für den Verbraucher ansprechende goldbraune Optik und Knusprigkeit. Das Fischfleisch selbst, ist zart und hat eine bissfeste und saftige Konsistenz.

Der zunehmenden Nachfrage an derartigen Produkten steht aber eine skeptischere Verbraucherschaft gegenüber, die eine nachhaltige Nahrungsmittelerzeugung verlangt. Aus diesem Grund gewinnen Produkte aus pflanzlichen Rohstoffen, insbesondere pflanzlichen Proteinen zunehmend an Bedeutung.

Für Fischersatzprodukte basierend auf pflanzlichen Proteinen ergibt sich dabei die Herausforderung, neben der Farbe auch die Konsistenz und die Haptik möglichst gut an das Original anzunähern. Bei veganen oder vegetarischen Produkten konnte die Konsistenz und auch der haptische Eindruck, beispielsweise von Fischfiletstücken oder auch fischstäbchen nicht zufriedenstellend erreicht werden. Dies liegt unter anderem daran, dass gerade Fischprodukte oftmals eine faserige Struktur bei gleichzeitiger guter Bissfestigkeit und hoher Saftigkeit aufweisen. Diese beiden Eigenschaften sind mit Blick auf pflanzliche Proteine eher gegensätzlich, so dass beide Eigenschaften bislang nicht ausreichend gut erfüllt werden konnten. Daneben besitzen pflanzliche Proteine zum einen einen charakteristischen Eigengeschmack und auch eine Farbe, die sich von originalen Fischprodukten wie Fischstäbchen oder panierten Fischfilets unterscheidet.

Beimischungen von Verdickungsmitteln erhöhen zwar die Bissfestigkeit, verringern aber auch die faserige Struktur sowie die Saftigkeit des Produkts.

Eine Aufgabe der vorliegenden Erfindung besteht darin, vegane oder vegetarische Fischersatzprodukte bereitzustellen, die sowohl in den äußeren Eigenschaften also auch in dem haptischen Bisseindruck Fischprodukten und insbesondere Fischstäbchen möglichst nahe kommen.

### ZUSAMMENFASSUNG DER ERFINDUNG

Diese Aufgabe wird mit dem Gegenstand des Anspruchs 1 sowie mit einem Verfahren zur Herstellung nach Anspruch 15 adressiert. Ausführungen und Ergänzungen ergeben sich aus den Unteransprüchen.

Die Erfinder haben erkannt, dass den unterschiedlichen und zum Teil gegensätzlichen Eigenschaften eines Fischproduktes dennoch mit einer geeigneten Mischung aus einem Nasstexturat sowie einem Trockentexturat Rechnung getragen werden kann. Dabei wurde mit Vorteil erkannt, dass im Zusammenspiel mit beiden Texturaten diese unterschiedliche Eigenschaften aufweisen und auf diese Weise eine Kombination aus einer faserigen Struktur bei gleichzeitig hoher Saftigkeit und einer einstellbaren Bissfestigkeit zu den gewünschten Eigenschaften führt.

Zudem wurde überraschenderweise festgestellt, dass die sich durch die Kombination ergebende Oberfläche einer derartigen Mischung eine besonders gute Aufnahme und Haftung einer Panade ermöglicht. Dies erlaubt es, Fischalternativen bereitzustellen, die zum einen bissfest und saftig sind, aber auch eine gut haftende Ummantelung besitzen und ein Ablösen der Panade verhindern. Gerade dieser Aspekt ist aus Sicht des Verbrauchers wünschenswert.

In einigen Aspekten wird daher ein Fischersatzprodukt vorgeschlagen, welches eine Mischung aus einem Nasstexturat mit einem Gewichtsanteil im Bereich von 12 Gewichsts-% bis 35 Gewichts-% an der Gesamtmasse der Mischung auf Basis eines Erbsenproteins und/oder Ackerbohnenproteins umfasst. Dieses kann insbesondere zerkleinert sein, wodurch sich die Bissfestigkeit und Faserigkeit über einen weiten Bereich einstellen lassen. Mögliche Stückgrößen nach dem Zerkleinern liegen im Bereich von 4 mm bis 20 mm und insbesondere im Bereich von 5 mm bis 10 mm und ganz besonders im Bereich um 7 mm. Natürlich ist in diesen Fällen festzuhalten, dass es sich bei den Intervallen um Größen handelt, in denen der größte Teil der Fasern innerhalb des Intervalls liegt.

Weiterhin ist in der Mischung ein Trockentexturat vorhanden mit einem Gewichtsanteil im Bereich von 5 % bis 20 % an der Gesamtmasse der Mischung auf Basis wenigstens eines der folgenden Proteine, nämlich Weizen, Reis, Mais, Soja, Hafer oder Kombination hiervon. Es hat sich herausgestellt, dass Texturate mit diesen Proteinen sich durch eine deutliche Farbaufhellung auszeichnen. Dadurch kann auf aufhellende Zusatzstoffe verzichtet, aber dennoch dem Verbraucher der Eindruck eines hellen Fischfleisches vermittelt werden. Erfindungsgemäß wird die Mischung, insbesondere in einer Stäbchenform von einer Panade umgeben, die insbesondere an der Oberfäche der Mischung haftet.

Auf diese Weise wird ein Fischersatzprodukt geschaffen, welches nicht nur in seiner Form und Farbe, sondern auch in seinem haptischen und sensorischen Eindruck einem Fischprodukt sehr nahe kommt. Durch die Kombination eines Nass- mit einem Trockentexturat mit einem hellen Protein wird eine große Einstellmöglichkeit an der Mischung erreicht, so dass sich verschiedene Konsistenzen von Fischprodukten und im besonderen panierten Fischprodukten nachahmen lassen. Vertrauliche Verbrauchertests bestätigen die große geschmackliche, haptische und visuelle Ähnlichkeit mit bestehenden Fischprodukten.

Dabei ist festzuhalten, dass in einigen Aspekten das vorgeschlagene Produkt ohne den Einsatz von Methylcellulose auskommt, die in konventionellen Methoden zum Einsatz kommt, und bei Fischersatzprodukten verwendet wird, um den weichen saftigen Biss zu erreichen. Durch die Verwendung eines Trockentexturats konnte die gewünschte Eigenschaft erreicht werden, da dieses Wasser wie einen Schwamm aufsaugt. Dieser Effekt erzeugt auch die offenporige Oberfläche, wodurch die verbesserte Haftung der Panade erreicht wird.

In einigen anderen Aspekten kann je nach gewünschtem Produkt etwas Methylcellulose zugegeben werden, um bei speziellen Formen die Formstabilität zu gewährleisten. Allerdings hat sich herausgestellt, ddas die dafür notwendige megne geringer ist als bei konventionellen Produkten.

In einigen Aspekten schlagen die Erfinder ferner vor, ein Verhältnis von Nasstexturat zu Trockentexturat in der Mischung im Bereich zwischen 1,3:1 bis 3:1, insbesondere im Bereich von 1,5:1 bis 2,5:1 und insbesondere im Bereich 1,8:1 bis 2,2:1 einzustellen. Es hat sich gezeigt, dass diese Mischverhältnisse der Konsistenz von Fischstäbchen und anderen ähnlichen Fischprodukten besonders nahe kommen. In einigen Aspekten wird zudem ein zusätzlicher Wasseranteil im Bereich von 40 Gewichts-% bis 57 Gewichts-% und insbesondere im Bereich von 44 Gewichts-% bis 52 Gewichts-% in der Mischung vorgeschlagen. Das Wasser dient zum einen einem Aufqellen des Trockentexturats, zum anderen erzeugt es aber auch die notwendige Saftigkeit im Biss, der Fischstäbchen zu eigen ist. Liegt der Gesamtwasseranteil zu niedrig, so ist nach einer Verarbeitung, d.h. einem Braten des Produktes dieses zu trocken, liegt der Wasseranteil höher, behält das Produkt während des Zubereitens nur schwer seine Form und den Geschmack.

Da das Nasstexturat und im geringeren Maße auch das Trockentexturat in der Mischung selbst einen Wasseranteil aufweist, ergibt sich der gesamte Wasseranteil somit aus dem der Texturate sowie dem zusätzlich zugegebenen Anteil in der Mischung. Im Ergebnis kann dieser in einigen Aspekten somit zwischen 46 Gewichts-% bis 80 Gewichts-% und insbesondere im Bereich zwischen 50 Gewichts-% bis 65 Gewichts-% liegen. Dabei wird in einigen Aspekten von einem Wasseranteil von 50 Gewichts-% bis 70 Gewichts-% im Nasstexturat (bezogen auf dessen Gewicht) ausgegangen, der Wasseranteil im Trockentexturat ist deutlich kleiner und liegt im Bereich von 10 Gewichts-%.

In einigen Aspekten umfasst die Mischung weiterhin ein Bindemittel im Bereich von 3 Gewichts-% bis 9 Gewichts-% und insbesondere im Bereich von 4 Gewichts-% bis 7 Gewichts-% bezogen auf das Gewicht der Mischung. Mögliche Bindemittel umfassen Guarkenmehl, Johannisbrotkernmehl, Mais- oder Kartoffelstärke, Sago, Methylzellulose, Flohsamenschalen und Carragen und andere. In einigen weiteren Aspekten kann für eine zusätzliche Farbaufhellung, aber auch aus anderen Gründen ein Hafervollkornmehl hinzugefügt werden. Dieses bildet auch eine stärkehaltige Fraktion.

Die Mischung kann darüber hinaus mindestens ein Öl auf pflanzlicher Basis enthalten. Dieses mag Teil der Mischung sein, ist also nicht während des Vorfritierens oder als Bestandteil der Panade hinzugekommen. Geeignete Öle wären Rapsöl oder auch Sonnenblumenöl. In einigen Aspekten können aber auch Öle mit einem stärkeren Eigengeschmack verwendet werden, um so die Geschmacksrichtung auf natürliche Weise zu verschieben. Ein Anteil kann hierbei im Bereich zwischen 8 Gewichts-% und 15 Gewichts-%, insbesondere zwischen 9,5 Gewichts-% und 12 Gewichts-% an der Mischung liegen. Zudem können Fischaromen im Bereich um 1 Gewichts-% verwendet werden.

Durch den Prozess des Vorfritierens und mit dem Öl in der Panade liegt somit der gesamte Ölanteil in einem Fischersatzprodukt nach dem vorgeschlagenen Prinzip im Bereich zwischen 9 Gewichts-% und 17 Gewichts-%. Insbesondere ist er größer als 10 Gewichts-% bezogen auf das Gesamtgewicht. Der Ölanteil trägt zum Geschmack und der Saftigkeit des Produktes bei.

In einigen Aspekten umfasst das Nasstexturat wenigstens ein Erbsenproteinisolat oder Ackerbohnenproteinisolat, bzw eine Kombination hieraus. Das Isolat kann hierbei eine Trockenmasse im Bereich über 75 Gewichts-% an Protein, und insbesondere im Bereich von 80 Gewichts-% bis 93 Gewichts-% oder auch darüber aufweisen. Alternativ kann ein Erbsenproteinkonzentat oder Ackerbohnenkozentrat verwendet werden. In einem solchen Fall liegen die Trockenmassen an Protein im Konzentrat im Bereich unterhalb von 75 Gewichts-%, beispielsweise im Bereich von 40 Gewichts-% bis 75 Gewichts-% bis ca. 80 Gewichts-% und insbesondere im Bereich zwischen 45 Gewichts-% bis 65 Gewichts-%.

Zur Herstellung eines Nasstexturats wird dieses mit Wasser und anderen Zutaten vermischt und mittels eines Extruders extrudiert.

In einigen Aspekten weist die Mischung einen Anteil an Nassextrudat im Bereich von 15 Gewichts-% bis 36 Gewichts-% oder im Bereich von 20 Gewichts-% bis 26 Gewichts-% auf. In weiteren Aspekten kann der Anteil insbesondere im Bereich von 18 Gewichts-% bis 30 Gewichts-% liegen. In weiteren Aspekten kann der Anteil kleiner als 33 Gewichts-% und insbesondere kleiner als 27 Gewichts-% bezogen auf das Gewicht der Mischung sein.

In einigen Aspekten liegt der Anteil an dem Trockentexturat in der Mischung im Bereich von 5 Gewichts-% bis 18 Gewichts-%, oder auch im Bereich von 7 Gewichts-% bis 15 Gewichts-%. In anderen Aspekten ist der Anteil insbesondere im Bereich von 8 Gewichts-% bis 14 Gewichts-% und insbesondere kleiner als 14 Gewichts-% oder auch kleiner als 12 Gewichts-%. Das Trockentexturat bringt neben der hellen Farbe, wie oben bereits beschrieben auch zusätzlich eine Faserigkeit in das Endprodukt, welches einem Fischprodukt sehr ähnlich ist. Zudem unterstützt es eine mindere Klebrigkeit der Mischung in der Verarbeitung, und führt ebenfalls zu der Eigenschaft von Fischstäbchen, Fischburgern und anderen fischerhaltende Produkte, ohne größeren Kraftaufwand zerteilt werden zu können.

Es hat sich herausgestellt, dass ein gewisser Anteil an Panade nicht nur aus Kostengründen zweckmäßig erscheinen mag, sondern auch aus geschmacklichen und haptischen Gründen, um das Produkt in einer ansprechenden Form und Knusprigkeit zu halten. In einigen Aspekten ist daher vorgesehen, dass ein Anteil an Panade im Bereich von 10 Gewichts-% bis 30 Gewichts-% und insbesondere im Bereich von 15 Gewichts-% bis 25 Gewichts-% und insbesondere im Bereich von 15 Gewichts-% bis 22 Gewichts-% bezogen auf das Gesamtgewicht liegt. In weiteren Aspekten ist der Anteil an Panade kleiner als 28 Gewichts-% und insbesondere kleiner als 22 Gewichts-%. Unter 10 Gewichts-% sollte er jedoch nicht fallen, um die Festigkeit des Produktes nicht zu gefährden.

Es hat sich herausgestellt, dass die Mischung nach dem vorgeschlagenen Prinzip eine gewisse Oberflächenrauhigkeit aufweist, an der die Panade gut anhaftet. Diese Rauhigkeit ergibt sich aufgrund der Zusammensetzung der Mischung aus Nass- und Trockentexturat sowie den weiteren Zutaten, kann jedoch verringert werden, wenn der Ölanteil oder der Anteil an Nasstexturat zu hoch wird bzw. sich auch die Proteinmischung des Trockentexturats zu stark verändert. Nach dem vorgeschlagenen Prinzip wurde überaschenderweise jedoch eine offenporige Oberfläche festgestellt, welche die Nasspanade gut aufnehmen kann. In einigen Aspekten ist die Mischung von einer Nasspanade umgeben, die über eine Bemehlung haftend mit der ausgeformten Mischung verbunden ist. Auf der Nasspanade ist wiederum eine Trockenpanade aufgebracht, wobei letztere einen Anteil von über 25 Gewichts-% und insbesondere über 30 Gewichts-% an dem Gesamtgewicht der Panade aufweist. Während der Herstellung kann die Nasspanade in die offenporige Oberfläche der Mischung eindringen und dort gut anhaften, so dass diese Haftung auch während der zubereitung nicht wesentlich beeinträchtigt wird. Dies führt beim Verbraucher zu einem verbessertem Geschmackserlebnis.

Ein anderer Aspekt betrifft ein Verfahren zu Herstellung eines Fischersatzproduktes nach dem vorgeschlagenen Prinzip. Dabei wird in einem ersten Schritt ein Nasstexturat auf Basis eines Erbsenproteins und/oder Ackerbohnenproteins bereitgestellt. Ebenso wird ein Trockentexturat vorbereitet, welches auf einem Weizenprotein, einem Reisprotein, einem Mais- oder einem Sojaprotein beruht. Ebenso sind kombinationen aus derartigen Proteinen möglich. Zwar kann auch Ackerbohnenprotein oder Erbsenprotein verwendet werden, die oben genannten Proteine haben sich aber aufgrund eines anderen Eigengeschmacks sowie der hellen Farbe für Fischprodukte als zweckmäßig erwiesen. Demgegenüber ist es jedoch auch möglich, Nass- und Trockentexturate hinsichtlich der verwendeten Proteine zu vertauschen. Allerdings muss hierbei die Konsistenz der jeweiligen Proteinarten berücksichtigt werden, so dass sich die Mengenangaben gegenüber den oben angegebenen Beispielen unterscheiden.

Die beiden Texturate werden zusammen mit Öl und Wasser sowie Gewürzen gemischt. Dabei liegt ein Wasseranteil in einem Bereich von 40 Gewichts-% bis 57 Gewichts-% und insbesondere im Bereich von 44 Gewichts-% bis 52 Gewichts-% an der Mischung. Da auch das Nasstexturat sowie das Trockentexturat eine Wassermenge aufweisen, liegt der Gesamtwasseranteil in einem Bereich zwischen 46 Gewichts-% bis 63 Gewichts-% und insbesondere im Bereich zwischen 54 Gewichts-% bis 60 Gewichts-%. In einigen Aspekten liegt der gesamte Wasseranteil im Bereich von 58 Gewichts-%.

Die so erzeugte Mischung wird ausgeformt. Dabei sind verschiedene Formen unter anderem Stäbchen, Würfel und so weiter möglich. Die ausgeformte Mischung wird anschließend paniert und gegebenenfalls vorfritiert.

Durch die Mischung verschiedener Texturate wird eine saftige, aber dennoch bissfeste Form erreicht. Das Trockentexturat erzeugt dabei die fasrige Struktur und die größere offenporige Oberfläche. Letztere zeichnet sich durch eine verbesserte Haftfähigkeit aus, wodurch sich der Schritt des Panierens vereinfacht, da diese besonders gut an der Mischung haftet. In einigen Aspekten wird das Nasstexturat vor dem Mischen zerkleinert. Die Stückgröße liegt im Bereich von einigen mm, beispielsweise hauptsächlich zwischen 4 mm und 13 mm oder auch im Bereich von 5 mm bis 9 mm. Je nach gewünschtem Fertigungsprodukt kann die Stückgroße beim Zerkleinern unterschiedlich gewählt werden, so dass sich eine größere oder kleinere Verteilung einstellt. Das Wolfen erhöht zum einen die Oberfläche und unterstützt die Offenporigkeit, aber beeinflusst auch die Saftigkeit der Mischung.

In einem weiteren Aspekt wird das Trockentexturat vor dem Hinzufügen zu der Mischung mit Wasser aufgequollen. Die dazu verwendete Wassermenge ist in dem oben genannten Wasseranteil enthalten. Durch das Aufquellen vor dem Mischen wird die offenporige Struktur des gesamten Produktes unterstützt. Die Wassermenge, die hinzugefügt wird, liegt im Bereich von 30 Gewichts-% bis 80 Gewichts-% bezogen auf das Gewicht des Trockensubstrats. Ein Aufquellen erfolgt wenige Minuten vor dem Mischen, kann aber auch erst während des Mischens vorgenommen werden.

Ein weiterer Aspekt betrifft das panierte Fischersatzprodukt, welches in einem Temperaturbereich von 130°C bis 190°C und insbesondere zwischen 150°C und 190°C und insbesondere um die 170°C vorfritiert wird. Dies verbessert die Produktstabilität und erleichtert die spätere Zubereitung durch den Verbraucher. Für den Vorfritiervorgang kann beispielsweise Rapsöl, Sonnenblumenöl oder auch Kernöl verwendet werden.

In einigen Aspekten weist die Mischung einen Anteil an Nassextrudat im Bereich von 15 Gewichts-% bis 36 Gewichts-% oder im Bereich von 20 Gewichts-% bis 26 Gewichts-% auf. In weiteren Aspekten kann der Anteil insbesondere im Bereich von 18 Gewichts-% bis 30 Gewichts-% liegen. In weiteren Aspekten kann der Anteil kleiner als 33 Gewichts-% und insbesondere kleiner als 27 Gewichts-% bezogen auf das Gewicht der Mischung sein.

In einigen Aspekten umfasst das Nasstexturat wenigstens ein Erbsenproteinisolat oder Ackerbohnenproteinisolat, bzw. eine Kombination hieraus. Das Isolat kann hierbei eine Trockenmasse im Bereich über 80 Gewichts-% an Protein, und insbesondere im Bereich von 83 Gewichts-% bis 93 Gewichts-% aufweisen. Alternativ kann ein auch hier ein Kozentrat verwendet werden, bei dem die Trockenmasse an Protein beispielsweise im Bereich von 40 Gewichts-% bis 75 Gewichts-% bis ca. 80 Gewichts-% und insbesondere im Bereich zwischen 45 Gewichts-% bis 65 Gewichts-% liegt.

Zur Herstellung eines Nasstexturats wird dieses mit Wasser und anderen Zutaten vermischt und mittels eines Extruders extrudiert.

In einigen Aspekten liegt der Anteil an dem Trockentexturat in der Mischung im Bereich von 5 Gewichts-% bis 18 Gewichts-%, oder auch im Bereich von 7 Gewichts-% bis 15 Gewichts-%. In anderen Aspekten ist der Anteil insbesondere im Bereich von 8 Gewichts-% bis 14 Gewichts-% und insbesondere kleiner als 14 Gewichts-% oder auch kleiner als 12 Gewichts-%.

Werden die Mengen von Trocken und Nasstexturat benutzt, so ergibt sich in einigen Aspekten ein Verhältnis von Nasstexturat zu Trockentexturat zwischen 1,3:1 bis 3:1, insbesondere ein Verhältnis zwischen 1,5:1 bis 2,5:1 und insbesondere ein Verhältnis zwischen 1,8:1 bis 2,2:1. Mit anderen Worten ist bei dem vorgeschlagenen Produkt die verwendete Menge an Nasstexturat mindestens um 30% aber auch bis zu 300% höher als an Trockentexturat.

In einigen Aspekten umfasst die Mischung weiterhin ein Bindemittel im Bereich von 3 Gewichts-% bis 9 Gewichts-% und insbesondere im Bereich von 4 Gewichts-% bis 7 Gewichts-% bezogen auf das Gewicht der Mischung.

Die Mischung kann darüber hinaus mindestens ein Öl auf pflanzlicher Basis enthalten. Dieses mag Teil der Mischung sein, ist also nicht während des Vorfritierens oder als Bestandteil der Panade hinzugekommen. Geeignete Öle wären Rapsöl oder auch Sonnenblumenöl. In einigen Aspekten können aber auch Öle mit einem stärkeren Eigengeschmack verwendet werden, um so die Geschmacksrichtung auf natürliche Weise zu verschieben. Ein Anteil kann hierbei im Bereich zwischen 8 Gewichts-% und 15 Gewichts-%, insbesondere zwischen 9,5 Gewichts-% und 12 Gewichts-% an der Mischung liegen.

Durch den Prozess des Vorfrittierens und mit dem Öl in der Panade liegt somit der gesamte Ölanteil in einem Fischersatzprodukt nach dem vorgeschlagenen Prinzip im Bereich zwischen 9 Gewichts-% und 17 Gewichts-%. Insbesondere ist er größer als 10 Gewichts-% bezogen auf das Gesamtgewicht. Der Ölanteil trägt zum Geschmack und der Saftigkeit des Produktes bei.

Ebenso werden zum Mischen in geringeren Mengen Gewürze hinzugegeben. Diese können unter anderem aus folgenden Gewürzen ausgewählt sein: Oregano, Tomate, Pfeffer, Thymian, Petersilie, Fenchel, Dill, Paprika, Rosmarin, Liebstöckl, Curry und Knoblauch. In einigen Aspekten wird Salz hinzugegeben. Zudem ist es möglich, ein Fischaroma auf veganer Basis hinzuzufügen.

In einigen weiteren Aspekten wird während des Mischens der beiden bereitgestellten Texturate mit Öl und Wasser zusätzlich auch ein Bindemittel im Bereich von 3 Gewichts-% bis 9 Gewichts-% und insbesondere im Bereich von 4 Gewichts-% bis 7 Gewichts-% bezogen auf das Gewicht der Mischung hinzugefügt.

Es wird nun für den Schritt des Panierens vorgeschlagen, eine Bemehlung auf die ausgeformte Mischung aufzubringen und diese anschließend mit einer Nasspanade zu umschließen. Die Bemehlung bewirkt zusammen mit der offenporigen Struktur der Mischung eine gute Haftung der Nasspanade. Zudem kann die Nasspanade in die offenporige Struktur eindringen, was bei einer späteren Verarbeitung und einem Braten oder Fritieren eine Ablösung der Panade von der Mischung verhindert. Das Produkt bleibt so in seiner ursprünglichen Form erhalten. Anschließend wird die Nasspanade von der Trockenpanade umschlossen. Das System aus Bemehlung, Nasspanade und Trockenpanade bildet die Panade, deren Gewichtsanteil im Bereich einiger Prozent, beispielsweise wie oben angegeben liegt.

### KURZE BESCHREIBUNG DER ZEICHNUNG

Weitere Aspekte und Ausführungsformen nach dem vorgeschlagenen Prinzip werden sich in Bezug auf die verschiedenen Ausführungsformen und Beispiele offenbaren, die in Verbindung mit den begleitenden Zeichnungen ausführlich beschrieben werden.
Figur 1 zeigt eine Ausgestaltung eines Verfahrens nach dem vorgeschlagenen Prinzip:
Figuren 2 und 3 zeigen zwei Schnittansichten durch einen Fischburger bzw. ein Fischstäbchen

### DETAILLIERTE BESCHREIBUNG

Die folgenden Ausführungsformen und Beispiele zeigen verschiedene Aspekte und ihre Kombinationen nach dem vorgeschlagenen Prinzip. Es versteht sich von selbst, dass die einzelnen Aspekte und Merkmale der in den Abbildungen gezeigten Ausführungsformen und Beispiele ohne weiteres miteinander kombiniert werden können, ohne dass dadurch das erfindungsgemäße Prinzip beeinträchtigt wird. Einige Aspekte sind in Bereichen angegeben. Es ist zu beachten, dass in der Praxis geringfügige Abweichungen von diesen auftreten können, ohne jedoch der erfinderischen Idee zu widersprechen. Im folgenden werden verschiedene Gewichtsangaben oder auch Bereiche verwendet. Wenn hierzu nichts anderes genannt ist, sind diese Bereiche immer mit einer geringen Unsicherheit oder Varianz im Bereich von etwa 5% der jeweiligen Angabe beaufschlagt. Ein Anteil von 10% bedeutet somit 10% ± 0,5%.

Zum Zwecke dieser Anmeldung umfasst der Begriff "Pflanzenprotein" ein Pflanzenproteingemisch. Ein derartiges Pflanzenproteingemisch wird im Herstellungsprozess aus einer Pflanzenart gewonnen. Dies kann beispielsweise Ackerbohne oder Erbse oder eine andere Hülsenfrucht sein. In gleicher Weise eignen sich aber auch Weizen, Mais, Reis, Soja sowie andere Feldfrüchte zur Erzeugung eines Pflanzenproteins. Dabei können grundsätzlich auch verschiedene Pflanzenproteine gemischt werden.

Derartige Proteingemische besitzen im allgemeinen einen Proteinanteil, Stärke, sowie weitere Bestandteile wie Fasern, Mineralstoffe, Fette, Vitamine und andere. Zur Verarbeitung und insbesondere zur Extraktion oder Separation der Protein- und Stärkebestandteile kommen verschiedene Verfahren zum Einsatz, mit denen im Ergebnis Pflanzenproteinisolate und Pflanzenproteinkonzentrate erzeugt werden. Diese beschreiben jeweils Pflanzenproteingemische, welche in unterschiedlicher Konzentration vorliegen. Die anderen Bestandteile eines Isolats bzw. Konzentrats können aus dem Bereich der Fette, Zucker einschließlich Stärke, Cellulose, Fasern und Wasser stammen. Die Konzentration des Proteingemischs im jeweiligen Isolat bzw. Konzentrat hängt dabei nicht nur von der Art des Verarbeitungsprozesses ab, sondern auch von den Verfahrensschritten innerhalb eines jeden Prozesses, so dass sich hier eine Vielzahl von Gemischen mit unterschiedlichen Konzentrationen und Restbestandteilen ergibt.

Ein Pflanzenproteinisolat ist beispielsweise ein Gemisch aus einem Pflanzenprotein, bei dem die Konzentration des Proteingemisches im Bereich über 80% Gewichtsanteil, beispielsweise im Bereich von 83% bis 97% Gewichtsanteil besteht. Bei einem Proteinkonzentrat liegt der Gewichtsanteil im Bereich unterhalb von 80 Gewichts-%, beispielsweise im Bereich von 40 Gewichts-% bis 75 Gewichts-% bis ca. 80 Gewichts-% oder auch im Bereich zwischen 45 Gewichts-% und 65 Gewichts-%.

Sofern nicht anders genannt, umfasst ein "Pflanzenprotein" ein Pflanzenproteingemisch aus der jeweiligen Pflanze, andernfalls wird von einem "einzelnen Pflanzenprotein" gesprochen.

In entsprechender Weise ist ein "Erbsenprotein", ein "Weizenprotein" oder ein Pflanzenprotein auf Erbsen- bzw. Weizenbasis ein Proteingemisch, welches im wesentlichen Bestandteile aus der Erbse bzw dem Weizen umfasst und entsprechend aufbereitet wurde. Entsprechend ist ein Reisprotein ein solches Gemisch auf Basis von Reis, ein Ackerbohnenprotein ein solches Gemisch auf Basis von Ackerbohne. In gleicher Weise werden andere Pflanzenproteine bezeichnet und definiert.

Ein Nasstexturat im Sinne dieser Anmeldung beschreibt im Allgemeinen ein Erzeugnis, welches mittels Nasstexturierung hergestellt wurde. Bei geeigneter Prozessführung zeichnen sich Nasstexturate durch eine geschlossene faserartige, muskelfleischähnliche Textur aus. Bei einem Nasstexturat handelt es sich um das Erzeugnis eines Kochextrusionsprozesses, bei dem durch Verwendung einer gekühlten Düse eine Expansion einer protein- und wasserreichen Matrix am Düsenaustritt verhindert wird. Nasstexturate umfassen im wesentlichen eines oder mehrere Proteingemische, Gewürze, Öle oder Fette sowie einen hohen Wassergehalt im Bereich zwischen 50 Gewichts-% bis 80 Gewichts-% bezogen auf das Texturat.

Entsprechend kann das Nasstexturat in dem Fischersatzprodukt nach dem vorgeschlagenen Prinzip ein durch Nassextrusion einer Zusammensetzung enthaltend das erste Pflanzenprotein, Wasser und gegebenenfalls ein oder mehrere weitere Bestandteile hergestelltes Nasstexturat sein. Gemäß einiger Ausführungsformen enthält das Nasstexturat 45 Gewichts-% bis 80 Gewichts-% an Wasser, wie beispielsweise 50 Gewichts-% bis 70 Gewichts-% an Wasser, vorzugweise 55 Gewichts-% bis 65 Gewichts-% an Wasser.

Unter einem Trockentexturat wird im Allgemeinen ein Produkt verstanden, welches mittels Trockentexturierung hergestellt wurde. Bei geeigneter Prozessführung zeichnen sich Trockentexturate durch eine schwammartige oder faserige, offene Struktur aus. Trockentexturate haben in der Regel einen Wassergehalt von höchstens 20 Gewichts-% Wasser, oftmals sogar weniger als 10 Gewichts-%. Dadurch können sie bei Zugabe mit Wasser aufquellen, so dass sich eine leichte und faserige Struktur ergibt. Bei der Herstellung von Fischersatzprodukten nach dem vorgeschlagenen Prinzip stabilisiert das Trockentexturat die Mischung und bewirkt die Faserigkeit der Mischung.

Gemäß einiger Ausführungsformen enthält das Trockentexturat höchstens 20 Gewichts-% Wasser, wie beispielsweise höchstens 10 Gewichts-% Wasser oder höchstens 7 Gewichts-% Wasser. Gemäß einiger Ausführungsformen enthält das Trockentexturat 3 Gewichts-% bis 12% Gewichts-% Wasser.

In einer Ausführungsform umfasst eine Mischung nach dem vorgeschlagenen Prinzip für Fischstäbchen oder auch für panierte Fischburger einen Wasseranteil im Bereich zwischen 50 Gewichts-% und 65 Gewichts-%, insbesondere 55 Gewichts-%, 56 Gewichts-%, 57 Gewichts-% , 58 Gewichts-%, 59 Gewichts-% oder auch 60 Gewichts-%. Dabei wird dem Nasstexturat und dem Trockentexturat eine Wassermenge von 44 Gewichts-% bis 50 Gewichts-% bezogen auf die Gesamtmenge zugeführt.

Für das Nasstexturat kommt ein Erbsenproteinisolat zum Einsatz, welches selbst einen Proteinanteil größer als 83% bei gleichzeitig niedrigem Restwassergehalt von weniger als 7% aufweist. Das Nasstexturat wird durch Mischen des Isolats mit Wasser, Öl, Gewürzen und Stärkemehl erzeugt. Dann wird diese Mischung erhitzt, so dass das Protein koaguliert und sich mit den anderen Komponenten zu einer Masse verbindet. Diese wird unter hohem Druck aus einer gekühlten Düse gepresst, ohne dass die erhitzte Masse vorher expandiert.

Der Gewichtsanteil des so erzeugten Nasstexturats an der Mischung liegt im Bereich zwischen 18 Gewichts-% bis 23 Gewichts-%, insbesondere bei 19 Gewichts-%, 20 Gewichts-% oder auch 21 Gewichts-%.

Zudem wird ein Trockentexturat aus Weizenprotein der Mischung hinzugegeben. Das Weizenprotein ist dabei eine Mischung aus einem Proteinknzentrat und einem Proteinisolat mit einem insgesamten Proteinanteil im Bereich von 60 Gewichts-% bis 80 Gewichts-%. Für Trockentexturate hat es sich als zweckmässig erwiesen, wenn der Proteingehalt in den Trockenrohstoffen im Bereich von 35 % bis 90 % liegt. Im Gegensatz zu einem Nasstexturat wird ein Trockentexturat nicht über eine Kühldüse gepresst. Vielmehr kann es frei expandieren und wird zur Weiterverarbeitung bis auf eine Restfeuchte von weniger als 10 % getrocknet.

Der Gewichtsanteil des Trockentexturats ist gerigner als das des Nasstexturats und liegt im Bereich von 8 Gewichts-% bis 12 Gewichts-%, insbesondere bei 9 Gewichts-%, 10 Gewichts-% oder 11 Gewichts-%. Es hat sich als zweckmäßig für die Erzeugung von Fischstäbchen, Fischburger und allgemein Fichanalogon erwiesen, die Mischungen von Nasstexturat zu Trockentexturat im Verhältnis von 2:1 zu wählen.

Zu dieser Mischung wird weiterhin unter anderem Raps- und Leinöl hinzugefügt, und zwar mit einem Anteil im Bereich von 10 Gewichts-% bis 11 Gewichts-%, also beispielsweise 10,3 Gewichts-%, 10,4 Gewichts-%, 10,5 Gewichts-% oder auch 10,6 Gewichts-%. Ebenso kommen Gewürze hinzu mit einem Anteil im Bereich von 0,8 Gewichts-% bis 2 Gewichts-%, beispielsweise 1 Gewichts-% oder 1,5 Gewichts-%. Schließlich sind der Mischung natürliche Aromastoffe beigefügt, deren Anteil im Bereich um 1 Gewichts-%, also beispielsweise 0,9 Gewichts-%, 1 Gewichts-%, 1,1 Gewichts-%, 1,2 Gewichts-%, 1,3 Gewichts-%, oder auch 1,4 Gewichts-% liegen.

Die Mischung ist als Stäbchen oder auch als Burger entsprechend des gewünschten Endprodukts ausgeformt und von einer Panade umgeben. Die Panade umfasst einen Ölanteil sowie Mehl und andere Stärkeanteile, Salz und Gewürze. Dabei ist die Panade mehrschichtig aufgebaut. Der Gewichtsanteil am fertigen Produkt liegt im Bereich von weniger als 30 Gewichts-% bezogen auf das Gesamtgewicht, beispielsweise zwischen 15 Gewichts-% und 25 Gewichts-%. Das Fischersatzprodukt in Form von Fischstäbchen oder auch Fischburger ist vorfrittiert.

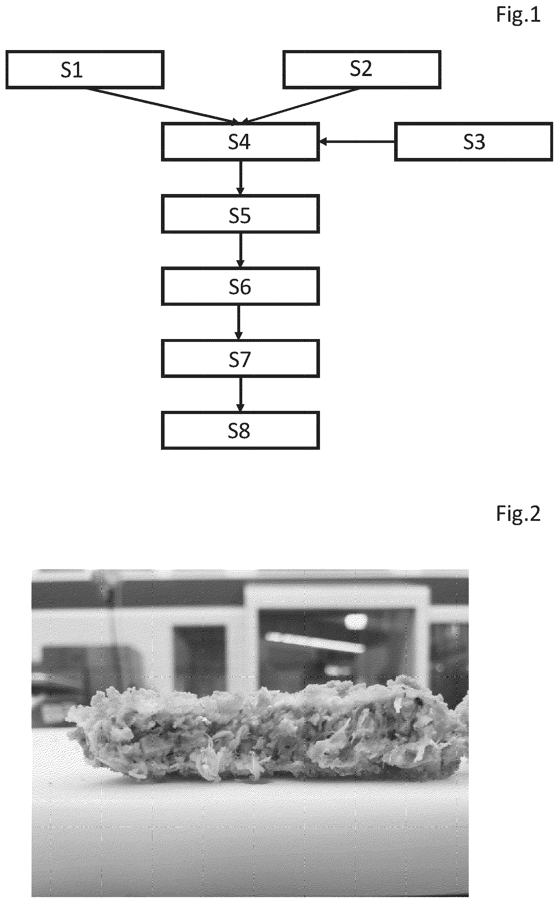

Figur 1 zeigt eine beispielhafte Ausführungsform eines Verfahrens zur Herstellung eines Fischersatzproduktes nach dem vorgeschlagenen Prinzip.

In Schritt S1 wird das Nasstexturat aus einer Kombination eines Erbsenproteins mit einem Ackerbohnenprotein bereitgestellt. Die Menge des Nasstexturats entspricht der in den obigen Beispielen angegebenen Menge. Das Nasstexturat wird gegbenenfalls gewolft, d.h. fein zerkleinert, gemahlt und vermengt. Die Körnung des Nasstexturats wird über die Wahl der Lochscheiben eingestellt. Für die Herstellung von Fischstäbchen oder auch Fischburgern haben sich Scheiben als zweckmäßig erwiesen, die eine Größenverteilung mit einem Maximum bei 6 mm bis 8 mm, beispielsweise bei 7 mm bewirken. Das zerkleinerte Nasstexturat wird in einen Mischbehälter gegeben.

Gleichzeitig wird in Schritt S2 ein Trockentexturat bereitgestellt. Dieses kann bereits über eine körnige oder faserige Struktur verfügen, so dass ein Wolfen oder Zerkleinern entfallen kann. Für die spätere Verarbeitung wird es jedoch in Schritt S2 kurz mit etwas Wasser aufgequollen, bevor es der Mischeinrichtung zugeführt wird. Ebenso werden in Schritt S3 die weiteren Zutaten für die Mischung, d.h. Öl, Aromen, Gewürze, Bindemittel einschließlich Salz bereitgestellt und der Mischeinrichtung zugeführt. Mögliche Bindemittel sind in dieser Anmeldung aufgeführt.

In Schritt S4 werden die Komponenten gemeinsam mit Wasser vermischt, so dass eine saftige Masse entsteht. Durch weiteres Aufquellen des Trockentexturats wird eine fasrige Komponente mit einer saftigen und bissfesten Komponente des Nasstexturats kombiniert. Die hinzugefügte Wassermenge entspricht dabei der in den obigen Beispielen angegebenen, wobei jedoch ein Teil dieses Wassers bereits zum Aufquellen des Trockentexturates in Schritt S2 verwendet wurde. Der Mischprozess erfolgt im wesentlichen bei Raumtemperatur oder sogal leicht gekühlt, d.h. nicht bei einer erhöhten Temperatur, wie dies bei der Herstellung der Ausgangstexturate der Fall ist.

In Schritt S5 wird die Mischung nun in Stäbchen oder auch in burgerform ausgeformt. Je nach verwendetem Mischer in Schritt S4 und Ausformungseinrichtung in Schritt S5 kann dies auch mittels einer Endloseinrichtung erfolgen, bei dem eingangsseitig immer wieder die einzelnen Zutaten und Komponenten zum Mischen und Ausformen zugeführt werden. In anderen Ausgestaltungen sind Mischer und Ausformungseinrichtungen getrennt, so dass die fertige Mischung zum Ausformen transportiert wird, bevor daraus Stäbchen, Burger oder andere Formen geformt werden.

In diesem Zusammenhang sei erwähnt, dass durch die Verwendung vegetarischer und/oder veganer Rohstoffe auch andere Formen wie Fischbällchen denkbar sind.

Die ausgeformte Mischung wird nun in Schritt S6 paniert. Dazu werden die Formen, der sogenannte Kern, z.B. die Fischstäbchen erst bemehlt (auch als Predusting bezeichnet), so dass die Oberfläche von einer Mehlschicht überzogen wird. Diese verbessert die spätere Haftung der Panade und reduziert die Feuchtigkeit an der Oberfläche. Nach der Bemehlung werden die Kerne durch eine Nasspanade gezogen, welche die Mischung von allen Seiten umgibt. Die Nasspanade umfasst neben Mehl und Stärke gegebenfalls auch Gewürze sowie Salz und wird mit Wasser zu einer viskosen Flüssigkeit gemischt. Sie bewirkt zusammen mit der Bemehlung die Haftung der späteren Kruste an der ausgeformten Mischung. Dabei wurde festgestellt, dass durch die Oberflächenbeschaffenheit der Kerne, insbesondere wegen der rauen und offenporigen Struktur die Nasspanade leicht eindringen kann. Dadurch verbindet diese sich fester mit den Kernen, und es entsteht eine zusammengehörige Struktur.

Anschließend wird die mit der Nasspanade umgebende Mischung mit einer Trockenpanadeschicht (Crumb) oder einer Kruste umgeben. Hierbei können verschiedene Trockenpanaden verwendet werden, so dass zusätzliche visuelle und auch sensorische Ausgestaltungen möglich sind. Mögliche Crumbs können neben Mehl, Salz und Kräutern auch weitere Stoffe wie Semmelbrösel, Cornflakes oder Zwiebeln enthalten.

In Schritt S7 werden die panierten Fischstäbchen oder -Burger mit Öl vorfritiert. Als Öl wird Rapsöl eingesetzt, welches sich durch ungesättigte Fettsäuren auszeichnet. Hintergrund ist der, dass sich während des Vorfritierens ein Teil des verwendeten Öls oder Fettes in der Panade ansammelt. Das verwendete Rapsöl ist ernährungsbiologisch günstiger als andere Fritierfette und kommt daher zum Vorfirtieren zum Einsatz. Die Fritiertemperatur liegt zwischen 150°C und 180°C, beispielsweise bei 170°C.

In einem letzten Schritt S8 werden die vorfritierten Produkte gekühlt, sortiert und verpackt. Dabei eignen sich die auf diese Weise hergestellten Produkte sowohl für die geforene Lagerung als auch für die Kühlregallagerung.

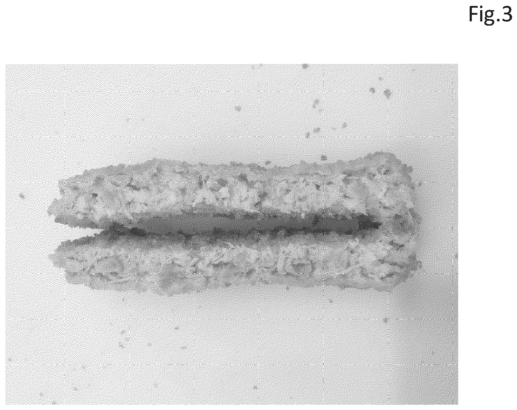

Die Figuren 2 und 3 zeigen zwei Schnittansichten durch einen Fischburger (Figur 2) und ein Fischstäbchen (Figur 3, welche nach dem oben vorgeschlagenen Verfahren und mit der vorgeschlagenen Mischung hergestellt wurde. In Figur 2 ist zu erkennen, dass die Struktur etwas gröber ist als die Struktur des Fischstäbchenanalogons aus Figur 3. Dies ergibt sich zum einen aus einer leicht anderen Zusammensetzung, beispielsweise einer größeren Menge an Gewürzen, zum anderen aber auch aus einer anderen mechanischen Verarbietungdes Nasstexturats. Das Fischstäbchen ist durch das verwendete helle Weizenprotein und die geringere Gewürzmenge generell etwas heller als der Fischburger, der Fischburger zeigt zudem einie etwas gröbere Struktur. Ebenfalls gut zu sehen ist die Grenzschicht der Mischung an die Panade, die in die offenporige Struktur eingedrungen ist und auf diese Weise die Haftung an der Mischung verbessert. Die sichtbare Dicke der Panade liegt im Bereich von 1/12 bis 1/8 der Gesamtdicke.

## Patentansprüche

1. Fischersatzprodukt umfassend:
- eine Mischung aus
- einem zerkleinerten Nasstexturat mit einem Gewichtsanteil im Bereich von 12 % bis 35 % an der Gesamtmasse der Mischung auf Basis eines Erbsenproteins und/oder Ackerbohnenproteins; und
- einem Trockentexturat mit einem Gewichtsanteil im Bereich von 5 % bis 20 % an der Gesamtmasse der Mischung auf Basis wenigstens eines der folgenden Proteine:
- Weizen;
- Reis;
- Mais;
- Soja;
- Hafer;
- Ackerbohne;
- Kombinationen hiervon;
- eine die Mischung umgebende Panade.

2. Fischersatzprodukt nach Anspruch 1, bei dem ein Verhältnis von Nasstexturat zu Trockentexturat in der Mischung im Bereich zwischen 1,3:1 bis 3:1, insbesondere im Bereich von 1,5:1 bis 2,5:1 und insbesondere im Bereich 1,8:1 bis 2,2:1 liegt.

3. Fischersatzprodukt nach einem der vorherigen Ansprüche, bei dem die Mischung einen zusätzlichen Wasseranteil im Bereich von 40 Gewichts-% bis 57 Gewichts-% und insbesondere im Bereich von 44 Gewichts-% bis 52 Gewichts-% aufweist; und/oder bei dem ein Gesamtwasseranteil in einem Bereich zwischen 50 % Gewichts-% bis 63 Gewichts-% und insbesondere im Bereich zwischen 54 Gewichts-% bis 60 Gewichts-% liegt; und/oder bei dem das Trockentexturat der Mischung einen Wasseranteil von weniger als 20 Gewichts-% und insbesondere weniger als 15 Gewichts-% und insbesondere im Bereich von 3 Gewichts-% bis 12 Gewichts-% aufweist.

4. Fischersatzprodukt nach einem der vorherigen Ansprüche, weiter umfassend
- ein Bindemittel im Bereich von 3 Gewichts-% bis 9 Gewichts-% und insbesondere im Bereich von 4 Gewichts-% bis 7 Gewichts-% bezogen auf das Gewicht der Mischung; und/oder
- mindestens ein Öl auf pflanzlicher Basis, insbesondere Rapsöl, das einen Anteil zwischen 8 Gewichts-% und 15 Gewichts-%, insbesondere zwischen 9,5 Gewichts-% und 11 Gewichts-% aufweist; und/oder
- wobei ein Gesamtfett oder Ölanteil in einem Bereich zwischen 9 Gewichts-% und 17 Gewichts-% liegt und insbesondere größer als 10 Gewichts-% ist.

5. Fischersatzprodukt nach einem der vorherigen Ansprüche, bei dem
- das Nasstexturat wenigstens eines aus einem Erbsenproteinisolat und einem Ackerbohnenproteinisolat umfasst; und optional
- das Isolat eine Trockenmasse im Bereich über 80 Gewichts-% an Protein, und insbesondere im Bereich von 83 Gewichts-% bis 93 Gewichts-% aufweist; und/oder
- das Nasstexturat wenigstens eines aus einem Erbsenprotkonzentrat und einem Ackerbohnenproteinkonzentrat umfasst.

6. Fischersatzprodukt nach einem der vorherigen Ansprüche, bei dem das Nasstexturat einen Anteil an der Mischung im Bereich von 15 Gewichts-% bis 36 Gewichts-% und insbesondere im Bereich von 18 Gewichts-% bis 30 Gewichts-% und insbesondere einen Anteil kleiner als 27 Gewichts-% aufweist; und/oder
bei dem das Trockentexturat einen Anteil an der Mischung im Bereich von 5 Gewichts-% bis 18 Gewichts-% und insbesondere im Bereich von 8 Gewichts-% bis 14 Gewichts-% und insbesondere einen Anteil kleiner als 14 Gewichts-% aufweist; und/oder bei dem die Panade einen Anteil im Bereich von 10 Gewichts-% bis 30 Gewichts-% und insbesondere im Bereich von 15 Gewichts-% bis 25 Gewichts-% und insbesondere im Bereich von 17 Gewichts-% bis 20 Gewichts-% aufweist.

7. Fischersatzprodukt nach einem der vorherigen Ansprüche, bei dem die Panade eine die Mischung umgebende Nasspanade sowie eine darauf aufgebrachte Trockenpanade umfasst, wobei die Nasspanade über eine Bemehlung mit der Oberfläche der Mischung haftend verbunden ist.

8. Verfahren zur Herstellung eines Fischersatzprodukts nach einem der vorherigen Ansprüche, umfassend die Schritte:
- Bereitstellen eines Nasstexturats auf Basis eines Erbsenproteins und/oder Ackerbohnenproteins;
- Bereitstellen eines Trockentexturats auf Basis wenigstens eines der folgenden Proteine:
- Weizen:
- Reis;
- Mais;
- Soja;
- Hafer;
- Ackerbohne;
- Kombinationen hiervon;
- Mischen der beiden bereitgestellten Texturate mit Öl und Wasser sowie Gewürzen, wobei der zugeführte Wasseranteil im Bereich von 40 Gewichts-% bis 57 Gewichts-% und insbesondere im Bereich von 44 Gewichts-% bis 52 Gewichts-% an der Mischung liegt;
- Ausformen der Mischung zur Erzeugung des Fischersatzprodukts;
- Panieren des ausgeformten Produktes sowie optionales Vorfritieren des solchen.

9. Verfahren nach Anspruch 8, bei dem der Schritt des Bereitstellens des Nasstexturats umfasst:
- ein Zerkleinern, insbesondere ein Wolfens des Texturats vor dem Mischen der Texturate; und/oder
- ein Erzeugen eines Nasstexturats aus einem Erbsenproteinisolat und/oder Ackerbohnenproteinisolats mit einem Anteil im Bereich über 80 Gewichts-% an Protein, und insbesondere im Bereich von 85 Gewichts-% bis 93 Gewichts-%; und/oder wobei der Schritt des Bereitstellens des Trockentexturats den Schritt eines Aufquellens mit Wasser vor dem Mischen der Texturate umfasst.

10. Verfahren nach einem der Ansprüche 8 bis 9, bei dem der Schritt des Vorfritierens in einem Temperaturbereich von 130°C bis 190°C und insbesondere zwischen 150°C und 190°C und insbesondere um die 170°C unter Verwendung eines Öls aus der Gruppe bestehend aus:
- Rapsöl;
- Sonnenblumenöl; und
- Kernöl erfolgt.

11. Verfahren nach einem der Ansprüche 8 bis 10, bei dem das Nasstexturat und das Trockentexturat im Verhältnis zwischen 1,3:1 bis 3:1, insbesondere im Verhältnis zwischen 1,5:1 bis 2,5:1 und insbesondere im Verhältnis zwischen 1,8:1 bis 2,2:1 liegt.

12. Verfahren nach einem der Ansprüche 8 bis 11, bei dem ein Ölanteil in dem Schritt des Mischens im Bereich zwischen 8 Gewichts-% und 15 Gewichts-%, insbesondere zwischen 9,5 Gewichts-% und 12 Gewichts-% liegt.

13. Verfahren nach einem der Ansprüche 8 bis 12, bei dem
- das Nasstexturat einen Anteil an der Mischung im Bereich von 15 Gewichts-% bis 30 Gewichts-% und insbesondere im Bereich von 18 Gewichts-% bis 25 Gewichts-% und insbesondere einen Anteil kleiner als 25 Gewichts-% aufweist; und/oder
- das Trockentexturat einen Anteil an der Mischung im Bereich von 5 Gewichts-% bis 18 Gewichts-% und insbesondere im Bereich von 8 Gewichts-% bis 14 Gewichts-% und insbesondere einen Anteil kleiner als 14 Gewichts-% aufweist.

14. Verfahren nach einem der Ansprüche 8 bis 13, bei dem der Schritt des Mischens der beiden bereitgestellten Texturate mit Öl und Wasser umfasst:
- Hinzufügen eines Bindemittels im Bereich von 3 Gewichts-% bis 9 Gewichts-% und insbesondere im Bereich von 4 Gewichts-% bis 7 Gewichts-% bezogen auf das Gewicht der Mischung.

15. Verfahren nach einem der Ansprüche 8 bis 14, bei dem der Schritt des Panierens umfasst:
- Aufbringen einer Bemehlung auf die ausgeformte Mischung;
- Aufbringen einer Nasspanadade auf der Bemehlung, derart dass diese über die Bemehlung insbesondere haftend mit der Mischung verbunden ist;
- Aufbringen einer Trockenpanade auf die Nasspanade.
